# EUROPÄISCHE PATENTSCHRIFT

(11) **EP 2 667 188 B1**
(45) Veröffentlichungstag und Bekanntmachung des Hinweises auf die Patenterteilung: **23.06.2021**
(21) Anmeldenummer: 12169416.0
(22) Anmeldetag: 25.05.2012
(51) Int. Cl.: G01N 30/54, G01N 30/46, G01N 30/60

(54) **Trennsäulenofen**
Oven for chromatography columns
Four pour colonnes de séparation

(43) Veröffentlichungstag der Anmeldung: 27.11.2013
(73) Patentinhaber: Roussev, Manol, 12053 Berlin (DE); Plagge, Jörg, 12209 Berlin (DE)
(72) Erfinder: Roussev, Manol, 12053 Berlin (DE); Plagge, Jörg, 12209 Berlin (DE)
(74) Vertreter: Habbel, Ludwig

(56) Entgegenhaltungen:
- EP-A1- 0 892 267
- EP-A2- 2 329 258
- DE-A1-102004 018 159
- US-A- 3 923 460
- US-A1- 2010 024 527

## Beschreibung

Die Erfindung betrifft einen Trennsäulenofen, wie er für die Flüssigkeitschromatographie verwendet wird.

Aus der DE 10 2004 018 159 A1 ist ein Gaschromatograph mit Trennsäulen bekannt, bei dem mittels zweier verstellbarer Schaltventile eine bestimmte, aus mehreren Trennsäulen wählbare Trennsäule zwischen einen Injektor und einen Detektor geschaltet werden kann, während gleichzeitig Spül- oder Trägergas durch die verbliebenen Trennsäulen geleitet wird. Sämtliche Trennsäulen werden dabei in derselben Richtung von den Gasen durchströmt. Die Gaschromatographie unterscheidet sich von der Flüssigkeitschromatographie.

Aus der US 3 923 460 A ist ein lonenaustauschchromatograph bekannt, der zwei parallele Trennsäulen aufweist, so dass Kationen und Anionen aus derselben Probe getrennt voneinander und fortlaufend analysiert werden können. Hierzu wird ein wasserbasierter Flüssigkeitsstrom aufgespalten und jeweils ein Teilstrom in eine der beiden Trennsäulen geleitet. In der ersten Trennsäule ist ein Kationentauscher-Harz vorgesehen, und in der zweiten Trennsäule ein Anionentauscher-Harz, um so die unterschiedlichen Ionen aus der Flüssigkeit analysieren zu können. Damit die unterschiedlichen Ionen nicht gleichzeitig zum Detektor in Form einer Leitfähigkeits-Messeinrichtung gelangen, sind die beiden Trennsäulen unterschiedlich lang ausgestaltet, so dass die Ionen zu unterschiedlichen Zeiten nacheinander aus den beiden Trennsäulen gelangen. Zur Reinigung wird vorgeschlagen, das Eluat durch zwei hintereinander geschaltete Reinigungsharzbetten zu leiten und Anlagenteile des lonenaustauschchromatographen von Zeit zu Zeit mit einem Bakterizid zu durchspülen. Alternativ können die lonentauscher-Harze rückgespült werden.

Bei der Flüssigkeitschromatographie-Massenspektrometrie besteht das Problem, beispielsweise bei der Analyse von Lebensmitteln auf Pflanzenschutzmittelrückstände, bei welcher zunächst ein Extrakt hergestellt wird, dessen Bestandteile dann in einem so genannten Lauf auf der Trennsäule des Flüssigkeitschromatographen aufgetrennt werden, dass neben den zu untersuchenden Komponenten eine so genannte "Begleitmatrix" vorliegt, welche häufig einen Anteil von 99 % oder mehr ausmacht. Um anschließend eine präzise Analyse der zu untersuchenden Stoffe zu ermöglichen, muss die verbleibende Begleitmatrix entfernt werden. Da diese während des chromatographischen Laufes nicht vollständig von der Trennsäule entfernt werden kann, für eine weitere Analyse auf der selben Trennsäule die selbige jedoch matrixfrei vorliegen muss, muss die Trennsäule rückgespült, also entgegen der ursprünglichen Strömungsrichtung durchströmt werden. Das Verfahren ist zeitaufwändig, so dass beispielsweise zu einem chromatographischen Lauf, welcher etwa 30 Min. dauert, zusätzlich eine Rückspülzeit in gleicher Größenordnung hinzukommt. Da der chromatographische Lauf bei einer definierten Temperatur durchgeführt wird, wird die Anordnung einer Trennsäule in einer beheizbaren Einrichtung als so genannter Trennsäulenofen bezeichnet.

Aus der Praxis sind Trennsäulenöfen mit zwei Trennsäulen bekannt, bei welchen jeweils eine dieser beiden Trennsäulen für einen chromatographischen Lauf genutzt wird und die zweite Säule rückgespült werden kann. Weiterhin sind aus der Praxis Trennsäulenöfen bekannt, die eine Vielzahl von Säulen, beispielsweise fünf oder sechs Säulen aufweisen, von denen jedoch nicht jede Säule rückgespült werden kann. Schließlich sind chromatographische Trennsäulen bekannt, die nicht temperiert sind, also nicht in Form eines Trennsäulenofens betrieben werden.

Aus der EP 2 329 258 A2 und der EP 0 892 267 A1 ist jeweils eine Anordnung von mehreren Trennsäulenöfen für die Flüssigkeitschromatographie bekannt. Ventilanordnungen ermöglichen es, einen Flüssigkeitsstrom aufzuteilen, so dass mehrere Trennsäulen gleichzeitig durchströmt werden können.

Der Erfindung liegt die Aufgabe zugrunde, einen Trennsäulenofen für die Flüssigkeitschromatographie anzugeben, der es erstens ermöglicht, eine Vielzahl von chromatographischen Läufen innerhalb einer vorgegebenen Zeitdauer durchzuführen, der zweitens eine theoretisch unbegrenzte hohe Anzahl an Trennsäulen - und jedenfalls wenigstens fünf - zur Verfügung stellt, der drittens die zeitgleiche Nutzung einer Trennsäule zur chromatographischen Trennung und einer weiteren Trennsäule im Rückspülbetrieb und viertens einen automatischen Betrieb des Trennsäulenofens ermöglicht.

Diese Aufgabe wird durch einen Trennsäulenofen mit den Merkmalen des Anspruchs 1 gelöst.

Die Erfindung schlägt mit anderen Worten vor, innerhalb eines Trennsäulenofens mindestens fünf Trennsäulen anzuordnen, so dass im Gegensatz zu nicht temperierten Trennsäulen sämtliche Trennsäulen dieses Trennsäulenofens temperiert werden können und damit auch für chromatographische Läufe genutzt werden können, die ein entsprechendes Temperaturniveau erfordern.

Weiterhin ist erfindungsgemäß eine Ventilanordnung vorgesehen, welche es ermöglicht, dass jede der Trennsäulen wahlweise in Vorwärtsrichtung, also während eines chromatographischen Laufs, oder in Rückwärtsrichtung, also während des Rückspülens, durchströmt werden kann, so dass eine hohe Effizienz der Trennsäulen dadurch ermöglicht wird, dass diese wiederholt genutzt werden können, nämlich nach einem ersten chromatographischen Lauf rückgespült und anschließend für einen zweiten chromatographischen Lauf genutzt werden können. Da die Ventilanordnung für die Funktionsweise des Trennsäulenofens wesentlich ist, nämlich die Auswahl der jeweils durchströmten Trennsäule ebenso bestimmt wie die Strömungsrichtung durch die Trennsäule, wird die Ventilanordnung als Teil bzw. als Erweiterung des Trennsäulenofens angesehen, so dass der vorliegende Vorschlag einen um die Ventilanordnung ergänzten Trennsäulenofen betrifft. Die Ventilanordnung kann jedoch gegebenenfalls bei bereits vorhandenen Trennsäulenöfen nachgerüstet werden.

Im Unterschied zu einem Trennsäulenofen, bei welchem die eingesetzten Trennsäulen nicht rückgespült werden, ermöglicht die erfindungsgemäße Ausgestaltung des Trennsäulenofens, dass sämtliche Trennsäulen mehrfach nacheinander für chromatographische Läufe genutzt werden können, ohne dass diese durch Reste der verbleibenden Begleitmatrix verunreinigt sind. Dabei ist vorschlagsgemäß ein automatischer Betrieb des Trennsäulenofens möglich, beispielsweise auch über Nacht, an Wochenenden oder zu ähnlichen Zeiten, zu denen im Labor kein Personal anwesend ist. Zu diesem Zweck weist der vorschlagsgemäße Trennsäulenofen eine Ventilanordnung auf, die es ermöglicht, die einzelnen Trennsäulen wahlweise vorwärts oder rückwärts durchströmen zu lassen und zwar individuell für jede einzelne Trennsäule. Dadurch, dass die Ventile der Ventilanordnung motorisch verstellbar sind, können diese mittels einer entsprechenden Ventilsteuerung angesteuert werden, so dass mittels dieser Ventilsteuerung die gesamte Anordnung von Ventilen und Trennsäulenofen automatisch betrieben werden kann. Die Steuerung ist programmierbar, so dass die Beheizung den Erfordernissen entsprechend eingestellt werden kann, und so dass die einzelnen Fluidströme der einzelnen Trennsäulen ebenfalls den jeweiligen Erfordernissen entsprechend gesteuert werden können.

Vorschlagsgemäß wird die wahlweise vorwärts oder rückwärts erfolgende Durchströmung der einzelnen Trennsäulen dadurch ermöglicht, dass jeder Trennsäule ein Zulauf und ein Ablauf zugeordnet ist, wobei ein erstes Mehrwegeventil von dem Zulauf die Strömungsverbindung wahlweise zu einem ersten oder zu einem zweiten Flüssigkeitsanschluss der Trennsäule schalten kann und ein zweites Mehrwegeventil dementsprechend wahlweise von dem Ablauf einer Strömungsverbindung zu dem jeweils anderen, also dem zweiten oder dem ersten Flüssigkeitsanschluss der Trennsäule schalten kann, und zwar in Abhängigkeit von der Schaltstellung des ersten Mehrwegeventils. Dabei ist zusätzlich jeder Trennsäule ein Sperrventil zugeordnet, welches den Zulauf zu der Trennsäule entweder frei gibt oder sperrt.

Vorteilhaft können das erste und das zweite Mehrwegeventil zu einem einzigen Ventil zusammengefasst sein, wobei im Ventilgehäuse und in einem beweglichen Ventilkörper mehrere Öffnungen und Strömungsverbindungen geschaffen sind, so dass je nach Stellung des Ventilkörpers bei unveränderter Anordnung des Zulaufs und des Ablaufs unterschiedliche Strömungswege durch die Trennsäule geschaffen werden.

Dabei kann in konstruktiv möglichst einfacher Ausgestaltung vorgesehen sein, dass die Anschlussöffnungen, die im Ventilkörper vorgesehen sind, auf einer Kreisbahn liegend angeordnet sind, so dass durch eine einfache Rotationsbewegung des Ventilkörpers die unterschiedlichen im Ventilkörper vorgesehenen Strömungsverbindungen mit entsprechenden Anschlüssen im Ventilgehäuse verschaltet werden und sich dadurch die unterschiedlichen Strömungswege durch die Trennsäule ergeben.

Vorteilhaft können Mehrweg-Ventile verwendet werden, die so viele Ein- bzw. Ausgänge aufweisen, dass sie wahlweise die Herstellung einer Verbindung von einer Zu- oder Ablaufleitung mit jeder der Trennsäulen ermöglichen. Dementsprechend kann die Ventilanordnung so ausgestaltet sein, dass lediglich zwei solche Mehrweg-Ventile erforderlich sind, indem nämlich von einem Mehrweg-Ventil Zuleitungen zu sämtlichen Trennsäulen verlaufen und Ableitungen von sämtlichen Trennsäulen zu einem anderen Mehrweg-Ventil verlaufen. Dies kann vorteilhaft sowohl zum Zuführen des zu analysierenden Flüssigkeitsstroms als auch zum Zuführen der Rückspülflüssigkeit vorgesehen sein, so dass insgesamt vier derartige Mehrweg-Ventile Anwendung finden können.

Durch Verwendung weiterer Ventile kann vorteilhaft eine möglichst vielseitige Nutzung des Trennsäulenofens ermöglicht werden, indem jede Trennsäule wahlweise in der einen oder in der anderen Richtung für einen chromatographischen Lauf durchströmt werden und in dementsprechend jeweils umgekehrter Richtung rückgespült werden kann. Dieselben Anschlüsse, die als Zulauf und Ablauf der jeweiligen Trennsäule bezeichnet sind, können dementsprechend ihre Funktion ändern und wahlweise auch als Ablauf und Zulauf bezeichnet werden.

Vorteilhaft können die Mehrwegeventile mehr Ein- bzw. Ausgänge aufweisen, als der Anzahl der daran angeschlossenen Trennsäulen entspricht. Somit ist es möglich, zwei Mehrwegeventile unter Umgehung der Trennsäulen mittels einer Bypass-Leitung miteinander zu verbinden. Der Bypass kann beispielsweise genutzt werden, um - abgesehen von den Trennsäulen selbst - das System durchzuspülen, z. B. die Leitungen, Pumpen und die Mehrwegeventile, was zur Reinigung oder der Vorbereitung des Systems zwischen der Verwendung von zwei unterschiedlichen analytischen Methoden, bei welchen unterschiedliche Trennsäulen oder Flüssigkeitssysteme erforderlich sind, genutzt werden kann.

Vorteilhaft können die beiden einer Trennsäule zugeordneten Ventile im Sinne einer Parallelschaltung geschaltet sein, so dass sich ein logischer und leicht nachvollziehbarer bzw. überprüfbarer Aufbau der Ventilschaltung und der Trennsäulen ergibt, und so dass eine komplizierte, über mehrere Umwege verlaufende Führung der jeweiligen Flüssigkeitsströme vermieden werden kann. Bezogen auf die Mehrwegeventile bedeutet diese Parallelschaltung, dass bei den beiden Ventilen, die z. B. für die Führung des Analyse-Flüssigkeitsstroms vorgesehen sind, jeweils der gleich benannte Ein- bzw. Auslass genutzt wird. Für die Durchströmung der Trennsäule Nr. 3 kann daher an dem der Trennsäule vorgeschalteten Mehrwegeventil, welches den Flüssigkeitsstrom zu der Trennsäule führt, von den mehreren Ausgängen ein Ausgang Nr. 3 geschaltet sein. Dementsprechend kann an dem der Trennsäule nachgeschalteten Mehrwegeventil, zu welchem der Flüssigkeitsstrom von der Trennsäule geführt wird, von den mehreren Eingängen ein Eingang Nr. 3 geschaltet sein. In gleicher Weise kann die Schaltung der beiden Mehrwegeventile ausgelegt sein, welche für die Führung der Rückspül-Flüssigkeit vorgesehen sind.

Vorteilhaft kann vor und hinter jeder Trennsäule jeweils ein Dreiwege-Verbindungselement im Sinne einer T- oder Y-förmigen Leitungsverbindung vorgesehen sein, wobei dieses Verbindungselement eine Strömungsverbindung sowohl vom Zulauf des so genannten Messsystems als auch vom Zulauf des so genannten Reinigungssystems zu der jeweiligen Trennsäule herstellt, beziehungsweise - nämlich auf der anderen Seite der Trennsäule - eine Strömungsverbindung sowohl vom Ablauf des Messsystems als auch vom Ablauf des Reinigungssystems zu der jeweiligen Trennsäule herstellt. So müssen an den beiden ein- und ausgangsseitigen Flüssigkeitsanschlüssen der Trennsäule nicht jeweils zwei Leitungsanschlüsse geschaffen werden, nämlich erstens für die Messflüssigkeit und zweitens für die Reinigungsflüssigkeit, sondern die jeweils zu verwendende Flüssigkeit kann bis zu dem Dreiwege-Verbindungselement geführt werden und von dort durch einen einzigen Leitungsanschluss in die Trennsäule gelangen. Umgekehrt kann die jeweils verwendete Flüssigkeit durch einen einzigen Leitungsanschluss aus der Trennsäule herausströmen, bis zu dem Dreiwege-Verbindungselement. Von dort gelangt die Flüssigkeit automatisch bis zu dem Mehrwegeventil, welches zu dieser Trennsäule hin offen geschaltet ist, für die Messflüssigkeit beispielsweise das Mehrwegeventil des Messsystems, während der andere Strömungsweg versperrt ist, bei Verwendung der Messflüssigkeit beispielsweise das Mehrwegeventil des Reinigungssystems, so dass sich ab dem Dreiwege-Verbindungselement keine Strömung durch die Flüssigkeitsleitung zum Mehrwegeventil des Reinigungssystems hin ergibt.

Ausführungsbeispiele der Erfindung werden anhand der rein schematischen Zeichnungen näher erläutert. Dabei zeigen die
- Fig. 1: ein erstes Ausführungsbeispiel eines Trennsäulenofens, bei dem ausschnittsweise zwei Trennsäulen nebst zugehöriger Ventilanordnung in zwei unterschiedlichen Ventilstellungen dargestellt sind, und die
- Fig. 2 bis 5: ein zweites Ausführungsbeispiel eines Trennsäulenofens, bei dem fünf Trennsäulen nebst zugehöriger Ventilanordnung in vier unterschiedlichen Ventilstellungen dargestellt sind.

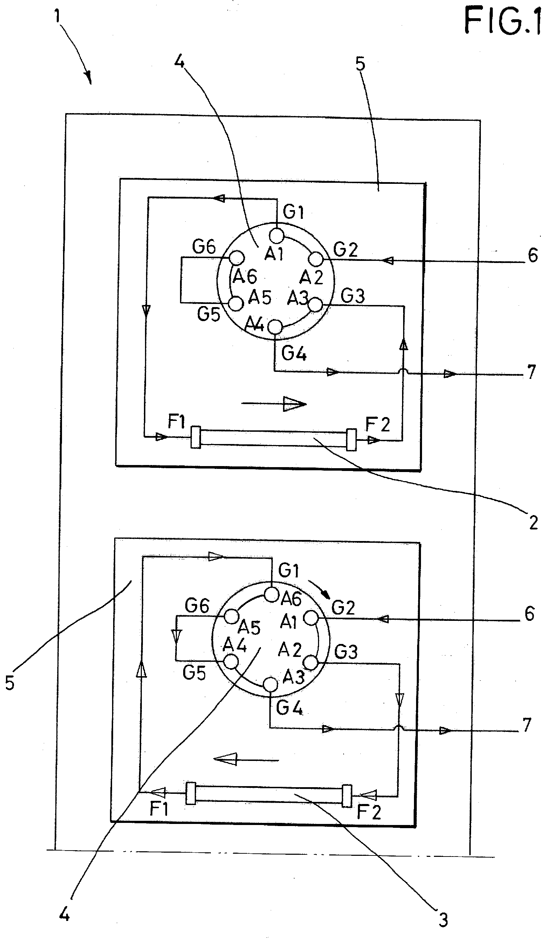

In Fig. 1 ist von einem Trennsäulenofen 1 lediglich ein Ausschnitt dargestellt, der zwei Trennsäulen 2 und 3 aufweist. Insgesamt weist der Trennsäulenofen 1 jedoch wenigstens fünf Trennsäulen auf, vorzugsweise sogar mehr als fünf Stück, z. B. neun Trennsäulen. Jede der beiden Trennsäulen 2 und 3 weist jeweils einen ersten Flüssigkeitsanschluss F1 und einen zweiten Flüssigkeitsanschluss F2 auf. Jede der in dem Trennsäulenofen 1 vorhandenen Trennsäulen ist ebenfalls dementsprechend aufgebaut, wobei lediglich zur Veranschaulichung von zwei unterschiedlichen Ventilstellungen, welche die Ventilanordnungen einnehmen können, die zwei dargestellten Trennsäulen 2 und 3 dargestellt und beschrieben werden.

Jeder Trennsäule 2 und 3 ist eine Ventilanordnung mit einem beweglichen Ventilkörper 4 und einem Ventilgehäuse 5 zugeordnet, welches den Ventilkörper 4 umgibt. Aufgrund der baugleichen Ausgestaltung werden für die Ventilanordnungen der beiden Trennsäulen 2 und 3 gleiche Bezugszeichen verwendet.

Für die oben dargestellte erste Trennsäule 2 ist die Stellung des Ventilkörpers 4 derart gewählt, dass die erste Trennsäule 2 einen chromatographischen Lauf durchführen kann, also in Vorwärtsrichtung durchströmt wird. Die Flüssigkeitsströmung verläuft dabei vom ersten Flüssigkeitsanschluss F1 durch die Trennsäule 2 hindurch zu deren zweiten Flüssigkeitsanschluss F2, wie dies durch den Pfeil oberhalb der Trennsäule 2 angedeutet ist.

Für die darunter dargestellte zweite Trennsäule 3 ist hingegen die Stellung des zugehörigen Ventilkörpers 4 derart gewählt, dass der Rückspülbetrieb dargestellt ist, wobei die zweite Trennsäule 3 in Richtung von ihrem zweiten Flüssigkeitsanschluss F2 durch die Trennsäule 3 hindurch zum ersten Flüssigkeitsanschluss F1 durchströmt wird, wie dies durch den Pfeil oberhalb der Trennsäule 3 angedeutet ist.

Jeder Trennsäule 2 und 3 ist jeweils ein Zulauf 6 und ein Ablauf 7 zugeordnet, durch den beispielsweise die Eluenten oder die Rückspülflüssigkeit in die Trennsäulen 2 und 3 bzw. wieder aus diesen heraus geführt werden können, wobei auch dies jeweils durch entsprechend ausgerichtete Pfeile angedeutet ist. Anhand der Trennsäule 2 wird der Strömungsverlauf während des chromatographischen Laufes erläutert: Vom Zulauf 6 gelangt die Flüssigkeit durch eine im Ventilgehäuse 5 vorgesehen zweite Gehäuseöffnung G2 in eine Anschlussöffnung A2, die im Ventilkörper 4 vorgesehen ist. Die Anschlussöffnung A2 ist mit einer Anschlussöffnung A1 des Ventilkörpers 4 strömungstechnisch verbunden, so dass die Flüssigkeit den Ventilkörper 4 durchströmt. Die Anschlussöffnung A1 steht mit einer Gehäuseöffnung G1 in Strömungsverbindung, so dass die Flüssigkeit von der Gehäuseöffnung G1, wie anhand der Pfeile angedeutet, zum ersten Flüssigkeitsanschluss F1 der Trennsäule 2 gelangt und dann in Vorwärtsrichtung die Trennsäule 2 durchströmt. Sie tritt aus dem zweiten Flüssigkeitsanschluss F2 der Trennsäule 2 aus und gelangt zu einer Gehäuseöffnung G3 des Ventilgehäuses 5. Dieser Gehäuseöffnung G3 liegt eine Anschlussöffnung A3 des Ventilkörpers 4 gegenüber, wobei die Anschlussöffnung A3 mit einer Anschlussöffnung A4 des Ventilkörpers 4 in Strömungsverbindung steht. Der Anschlussöffnung A4 liegt eine Gehäuseöffnung G4 des Ventilgehäuses 5 gegenüber, so dass die Flüssigkeit durch die Gehäuseöffnung G4 und von dieser zum Ablauf 7 strömen kann.

Im Unterschied dazu ist für die Trennsäule 3 der Rückspülbetrieb dargestellt, wobei hierzu der Ventilkörper 4 um 60° im Uhrzeigersinn verschwenkt worden ist, wie dies anhand des Pfeils oberhalb des Ventilkörpers 4 angedeutet ist. Die Rückspülflüssigkeit kommt über den Zulauf 6 in das Ventilgehäuse 5 und gelangt dort durch die Gehäuseöffnung G2 zur Anschlussöffnung A1 des Ventilkörpers 4, welche mit dessen Anschlussöffnung A2 in Strömungsverbindung steht. Der Anschlussöffnung A2 gegenüber befindet sich die Gehäuseöffnung G3 des Ventilgehäuses 5, so dass die Rückspülflüssigkeit von der Gehäuseöffnung G3 zum zweiten Flüssigkeitsanschluss F2 der Trennsäule 3 strömt und die Trennsäule 3 nun in Rückwärtsrichtung durchströmt, wie dies durch den Pfeil angedeutet ist, der oberhalb der Trennsäule 3 dargestellt ist. Die Rückspülflüssigkeit tritt am ersten Flüssigkeitsanschluss F1 der Trennsäule 3 aus dieser aus und gelangt zu einer ersten Gehäuseöffnung G1 des Ventilgehäuses 5. Dieser Gehäuseöffnung G1 liegt in dieser Ventilstellung die Anschlussöffnung A6 des Ventilkörpers 4 gegenüber, so dass die Flüssigkeit von dort zur Anschlussöffnung A5 strömt. Dieser Anschlussöffnung A5 liegt im Ventilgehäuse 5 die Gehäuseöffnung G6 gegenüber, die in Art einer Kurzschlussleitung mit einer Gehäuseöffnung G5 verbunden ist, welche die aus dem Ventilkörper 4 ausgetretene Flüssigkeit wieder in den Ventilkörper 4 zurückführt, nämlich durch die Anschlussöffnung A4 des Ventilkörpers 4, welche der Gehäuseöffnung G5 gegenüberliegt und mit dieser zusammenwirkt. Von der Anschlussöffnung A4 gelangt die Flüssigkeit innerhalb des Ventilkörpers 4 zu der Anschlussöffnung A3, die der Gehäuseöffnung G4 gegenüberliegt, so dass die Flüssigkeit durch die Gehäuseöffnung G4 und von dort zum Ablauf 7 strömt.

Abweichend von dem dargestellten Ausführungsbeispiel kann die Ausgestaltung der Ventilanordnung durch mehrere DreiWege-Ventile, oder durch einen translatorisch statt rotatorisch innerhalb eines Ventilgehäuses beweglichen Ventilkörper verwirklicht sein. Das dargestellte Ausführungsbeispiel ist insofern vorteilhaft, als es eine besonders einfache Umschaltung der Ventilanordnung ermöglicht. Dabei kann der Ventilkörper hin und her um jeweils die erwähnten 60° vor und zurück geschwenkt werden, oder er kann taktweise um jeweils 60° in derselben Drehrichtung weiter bewegt werden. In beiden Fällen ergeben sich stets abwechselnd die beiden dargestellten Strömungswege im Sinne der Vorwärtsströmung oder der Rückspülung.

Die Ventilstellung kann auf einfache Weise motorisch gesteuert werden, so dass mittels einer vollautomatischen programmierbaren Ofensteuerung des Trennsäulenofens 1 jede der in den Trennsäulenofen 1 vorhandenen Trennsäulen automatisch zwischen einem chromatographischen Lauf und einem Rückspülbetrieb umgeschaltet werden kann.

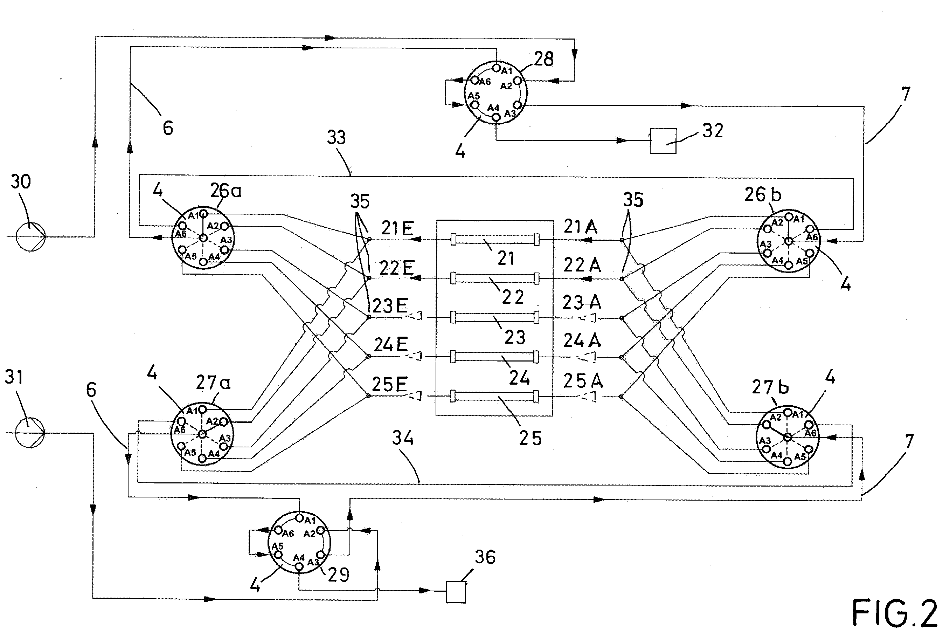

In Fig. 2 ist ein zweites Ausführungsbeispiel eines Trennsäulenofens dargestellt, bei dem fünf Trennsäulen 21, 22 ,23, 24 und 25 vorgesehen sind. Obwohl die Strömungsrichtung durch die Trennsäulen 21 bis 25 frei wählbar ist, wird definitionshalber als Normal-Strömungsrichtung eine Strömungsrichtung von links nach rechts bezeichnet. Der jeweils links dargestellte Flüssigkeitsanschluss der Trennsäulen 21 bis 25 wird daher als Einlass bezeichnet und ist mit 21E bis 25E gekennzeichnet, während der jeweils rechts dargestellte Flüssigkeitsanschluss der Trennsäulen 21 bis 25 als Auslass bezeichnet wird und mit 21A bis 25A gekennzeichnet ist.

Die zugehörige Ventilanordnung umfasst sechs Mehrwegeventile 26a, 26b, 27a, 27b, 28 und 29, wobei aus Gründen der Übersichtlichkeit lediglich die Ventilkörper 4 und nicht die Gehäuse dargestellt sind. Jedes Ventil 26a, 26b, 27a, 27b, 28 und 29 weist sechs Anschlussöffnungen A1 bis A6 auf. Abweichend von der Darstellung in Fig. 1 ist in den Fig. 2 bis 5 keine unterschiedliche Position der Anschlussöffnungen A1 bis A6 dargestellt, sondern vielmehr ist anhand der jeweils miteinander verbundenen Strömungskanäle die jeweilige Schaltstellung der Ventile verdeutlicht. Wie in Fig. 1 sind die Strömungskanäle durch einfache Linien dargestellt, und die jeweilige Strömungsrichtung, mit welcher der jeweilige Strömungskanal durchströmt wird, ist wie in Fig. 1 anhand von Richtungspfeilen angezeigt. Dabei sind für die tatsächlich von Flüssigkeit durchströmten Strömungskanäle die Richtungspfeile schwarz ausgefüllt dargestellt, während für die je nach Ventilstellung nicht genutzten Strömungskanäle die Richtungspfeile lediglich mit gestrichelter Kontur dargestellt sind.

Eine erste Pumpe 30 führt den zu analysierenden Flüssigkeitsstrom - auch als Messflüssigkeit bzw. Eluent bezeichnet - durch die Ventilanordnung und wahlweise eine der Trennsäulen 21 bis 25 zu einem Detektor 32, z. B. einem Massenspektrometer.

Eine zweite Pumpe 31 führt Reinigungs- bzw. Rückspülflüssigkeit heran, die z. B. zum Rückspülen der Trennsäulen 21 bis 25 oder zum Reinigen von Leitungen und Ventilen dient, wobei die Reinigungsflüssigkeit anschließend in einen Abfluss 36 geleitet wird.

Die Ventile 26a und 26b dienen dazu, die von der Pumpe 30 geförderte Messflüssigkeit zu einer der Trennsäulen 21 bis 25 zu führen. Die Ventile 27a und 27b dienen dazu, die von der Pumpe 31 geförderte Reinigungsflüssigkeit zu einer der Trennsäulen 21 bis 25 zu führen. Die Ventile 28 und 29 dienen dazu, die Strömungsrichtung durch die Trennsäulen 21 bis 25 zu bestimmen, wobei das Ventil 28 in den Flüssigkeitsstrom der Messflüssigkeit, also in das so genannte Messsystem eingebunden ist und das Ventil 29 in den Flüssigkeitsstrom der Reinigungsflüssigkeit, also in das so genannte Reinigungssystem.

Fig. 2 zeigt die Ventilanordnung in einer ersten Ventilstellung. Ausgehend von der Normal-Strömungsrichtung von links nach rechts durch die Trennsäulen 21 bis 25, befinden sich die Ventile 28 und 29 in einer so genannten "Rückwärts"-Stellung, so dass sich sowohl für die Mess- als auch für die Reinigungsflüssigkeit eine Durchströmung der Trennsäulen 21 bis 25 entgegen der Normal-Strömungsrichtung ergibt.

Die Messflüssigkeit wird durch die Pumpe 30 zum Ventil 28 gefördert und gelangt aufgrund von dessen "Rückwärts"-Stellung zum Ventil 26b. Im Unterschied zu den Ventilen 28 und 29 weisen die Ventile 26a,b und 27a,b jeweils eine zentrale Anschlussöffnung auf, die je nach Strömungsrichtung den Einlass oder den Auslass des Ventils darstellt. In der Schaltanordnung der Fig. 2 bildet diese zentrale Anschlussöffnung den Einlass für das Ventil 26b. In durchgezogener Linie ist dargestellt, dass das Ventil 26b eine Strömungsverbindung von dieser zentralen Anschlussöffnung zu seiner Anschlussöffnung A1 schafft.

Entsprechend der Definition der Normal-Strömungsrichtung stellt die Flüssigkeitsleitung, welche zur zentralen Anschlussöffnung des Ventils 26a führt, den mit 6 gekennzeichneten Zulauf für die Messflüssigkeit dar, und die Flüssigkeitsleitung, welche zur zentralen Anschlussöffnung des Ventils 26b führt, den mit 7 gekennzeichneten Ablauf für die Messflüssigkeit. Analog zu diesen Verhältnissen im Messsystem ist für das Reinigungssystem die Flüssigkeitsleitung, welche zur zentralen Anschlussöffnung des Ventils 27a führt, als Zulauf 6 für die Reinigungsflüssigkeit bezeichnet, und die Flüssigkeitsleitung, welche zur zentralen Anschlussöffnung des Ventils 27b führt, als Ablauf 7 für die Reinigungsflüssigkeit.

Gestrichelt ist angedeutet, dass abweichend von der beschriebenen Schaltstellung und entsprechend den anderen möglichen Schaltstellungen des Ventils 26b eine Strömungsverbindung von der zentralen Anschlussöffnung zu wahlweise einer der Anschlussöffnungen A2 bis A5 des Ventils 26b geschaffen werden kann, so dass die Messflüssigkeit wahlweise zu einer der Trennsäulen 22 bis 25 geführt werden könnte. Für diese ebenfalls möglichen Strömungsverläufe sind in Fig. 2 ebenfalls Strömungspfeile in die Leitungsabschnitte eingezeichnet, wobei allerdings tatsächlich jeweils nur eine der Trennsäulen mit dem Ventil 26b in Strömungsverbindung steht.

Zudem kann eine Strömungsverbindung von der zentralen Anschlussöffnung des Ventils 26b zu der Anschlussöffnung A6 geschaffen werden, so dass Flüssigkeit in eine als Bypass 33 bezeichnete obere Umgehungsleitung geleitet werden kann, welche die Trennsäulen 21 bis 25 umgeht.

Die Messflüssigkeit gelangt gemäß Fig. 2 entsprechend den Strömungspfeilen und entsprechend der beschriebenen Schaltstellung des Ventils 26b von der Anschlussöffnung A1 des Ventils 26b zum Flüssigkeitsanschluss 21A der Trennsäule 21 und tritt aus der Trennsäule 21 an deren Flüssigkeitsanschluss 21E aus. Weiter gelangt sie zur Anschlussöffnung A1 des Ventils 26a und entsprechend dessen Schaltstellung zu dessen zentraler Anschlussöffnung und von dort in das Ventil 28 und weiter zu dem Detektor 32.

Jeder der Trennsäulen 21 bis 25 ist also ein Zulauf und ein Ablauf zugeordnet. Ein erstes Mehrwegeventil - hier: Ventil 26b - stellt eine Verbindung zu einem Flüssigkeitsanschluss der installierten Trennsäulen her und kann wahlweise stattdessen jeder der anderen Trennsäulen zugeschaltet werden. Ein zweites Mehrwegeventil - hier: Ventil 26a - ist der Schaltung des ersten Mehrwegeventils entsprechend dem Ablauf der vom ersten Mehrwegeventil angesteuerten Trennsäule zugeordnet. Dabei sind das erste und das zweite Mehrwegeventil insofern zu einer Parallelschaltung zusammengefasst, als sich beide Ventile immer in der identischen Schaltposition befinden und von ihrer zentralen Anschlussöffnung die Strömungsverbindung zu derselben Anschlussöffnung schaffen, nämlich in beiden Fällen zu A1.

Ein weiteres Mehrwegeventil - hier: Ventil 28 - ist so in die Ventilanordnung eingesetzt, dass dieses mit den jeweiligen Zu- und Abflussanschlüssen der ersten beiden Mehrwegeventile 26a,b eine Strömungsverbindung herstellt. Dieses weitere Ventil 28 ermöglicht es, die Flussrichtung zwischen den ersten beiden Mehrwegeventilen 26a,b zu definieren. Weitere Zu- und Abflussverbindungen des dritten Mehrwegeventils 28 sind mit dem restlichen Messsystem verbunden, nämlich mit der die Messflüssigkeit fördernden Pumpe 30 und mit dem Detektor 32. Die beschriebenen unterschiedlichen Schaltstellungen der drei Mehrwegeventile 26a,b und 28 dienen der Auswahl der Trennsäule, welche zur chromatographischen Trennung eingesetzt wird, sowie zur Auswahl, in welcher Richtung diese Trennsäule durchströmt werden soll.

Für die Rückspülung der Trennsäulen 21 bis 25 ergibt sich eine ähnliche Führung der Reinigungsflüssigkeit. Die Elemente für die Führung der Messflüssigkeit können als Teil des so genannten Messsystems der gesamten, die Trennsäulen, die Ventilanordnung, Pumpen und den Detektor umfassenden Analyseanordnung bezeichnet werden. Dieses Messsystem ist im oberen Bereich sowie oberhalb von den Trennsäulen 21 bis 25 dargestellt, während die Elemente für die Führung der Reinigungsflüssigkeit als Reinigungssystem der gesamten Analyseanordnung bezeichnet werden können und im unteren Bereich sowie unterhalb von den Trennsäulen 21 bis 25 dargestellt sind.

Die Reinigungsflüssigkeit wird von der Pumpe 31 gefördert und mittels der beiden Ventile 27a und 27b durch die jeweils gewünschte Trennsäule geführt, und das Ventil 29 bestimmt die Strömungsrichtung, in welcher die jeweilige Trennsäule durchströmt wird. In Fig. 2 ist, wie anhand der Strömungspfeile verdeutlicht ist, auch für die Reinigungsflüssigkeit eine "Rückwärts"-Strömung entgegen der Normal-Strömungsrichtung vorgesehen, indem sich auch das Ventil 29 in seiner als "Rückwärts"-Stellung bezeichneten Schaltstellung befindet.

Auch die beiden Ventile 27a,b sind in der oben beschriebenen Parallelschaltung geschaltet, indem sich diese beiden Ventile in der identischen Schaltposition befinden. Dabei sollte von ihren jeweiligen zentralen Anschlussöffnungen jeweils keine Strömungsverbindung zu der Anschlussöffnung A1 des jeweiligen Ventils 27 a bzw. 27b geschaltet sein, sondern zu einer der anderen Anschlussöffnungen A2 bis A5. Im dargestellten Beispiel ist die Strömungsverbindung zu jeweils der Anschlussöffnung A2 der beiden Ventile 27a,b geschaltet. Bei der Beschaltung von A1 ergäbe sich nämlich ein Konfliktfall, da sowohl von den Ventilen 26a,b die Messflüssigkeit als auch von den Ventilen 27a,b die Reinigungsflüssigkeit zu derselben Trennsäule, nämlich 21, geführt würde.

Auch die Ventile 27a,b weisen zusätzlich zu den Anschlussöffnungen A1 bis A5, die zu den Trennsäulen 21 bis 25 führen, eine Anschlussöffnung A6 auf, die zu einer Umgehungsleitung führt, in diesem Fall zu einem unteren Bypass 34.

Die Flüssigkeitsanschlüsse 21E bis 25E und 21A bis 25A verzweigen sich, so dass wahlweise für die Messflüssigkeit oder für die Reinigungsflüssigkeit eine Strömungsverbindung von den Ventilen 26a,b oder von den Ventilen 27a,b zu den Trennsäulen 21 bis 25 geschaffen werden kann. Ein auch als T-Connector bezeichnetes Dreiwege-Verbindungselement 35 ist an jeder dieser Verzweigungsstellen vorgesehen, so dass die gewünschte Strömungsverbindung zu der jeweils gewünschten Trennsäule herstellbar ist und dabei vermieden wird, dass Flüssigkeit z. B. statt zur Trennsäule in eines der Ventile gelangen kann. Für die Messflüssigkeit beispielsweise ist das Dreiwege-Verbindungselement 35, welches zwischen dem Ventil 26b und der Trennsäule 21 angeordnet ist, zur Trennsäule 21 hin offen und durch die nicht fortgeführte Strömungsverbindung vom Ventil 27b gesperrt. Die Verbindungselemente unterstützen die Möglichkeit, wahlweise Mess- oder Reinigungsflüssigkeit wahlweise in Normal- oder in Rückwärts-Strömungsrichtung durch wahlweise jede der Trennsäulen 21 bis 25 zu leiten, so dass die Analyse-Anordnung mit höchstmöglicher Flexibilität betrieben werden kann.

Eine Strömungs- oder Sperrwirkung der jeweiligen Strömungsflüsse wird durch die Strömungs- oder Sperrstellung der Ventile 26a,b und 27a,b erreicht. Gegebenenfalls können die Dreiwege-Verbindungselemente 35 jeweils als Umschaltventil ausgestaltet sein, um von der jeweiligen Trennsäule eine Strömungsverbindung wahlweise zum Messsystem oder zum Reinigungssystem zu schaffen und gleichzeitig die jeweils andere Strömungsverbindung zum Reinigungs- oder zum Messsystem zu sperren, so dass an diesen Verbindungsstellen eine eventuelle Mischung von Mess- und Reinigungsflüssigkeit aufgrund von in den Leitungen befindlichen Restinhalten vermieden werden kann. Bei ausreichend kleinen Leitungsquerschnitten sind derartige Umschaltventile jedoch nicht erforderlich, z. B. bei Durchmessern von 0,1 mm bis 0,3 mm, da bei einem derartig kleinen Innendurchmesser des Strömungskanals eine Vermischung der Flüssigkeiten nicht zu befürchten ist, insbesondere wenn die Ventile 26a,b bzw. 27a,b des jeweils nicht benötigten Flüssigkeitskreises zu der jeweils betroffenen Trennsäule hin gesperrt sind.

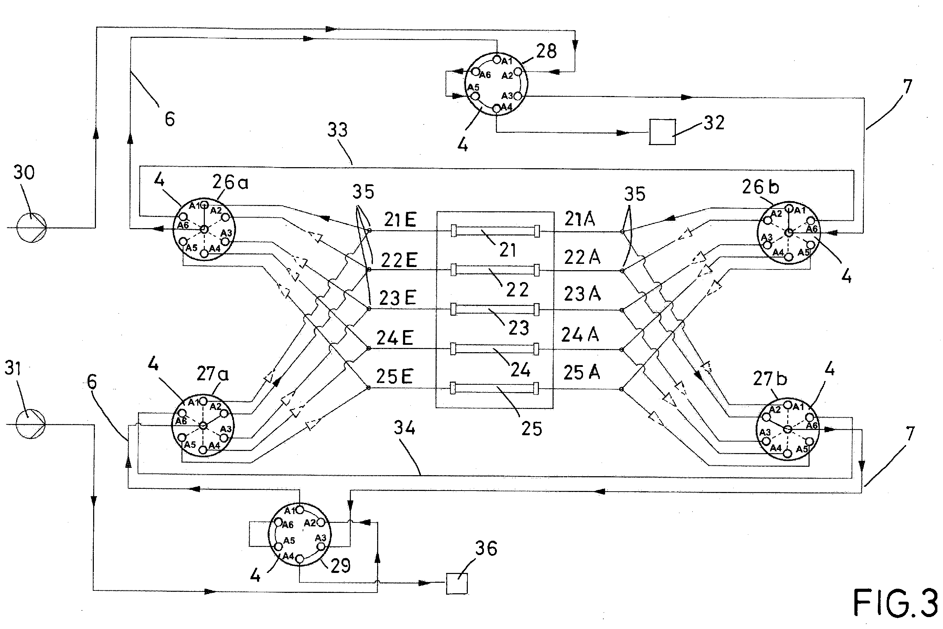

Fig. 3 zeigt die Ventilanordnung von Fig. 2 in einer zweiten Ventilstellung. Dieselben Trennsäulen 21 und 22 wie in Fig. 2 werden genutzt. Die Messflüssigkeit wird wie in Fig. 2 in rückwärtiger Strömungsrichtung durch die Trennsäule 21 geführt, die Reinigungsflüssigkeit jedoch wird aufgrund der gegenüber Fig. 2 geänderten Schaltstellung des Ventils 29 in Normal-Strömungsrichtung durch die Trennsäule 22 geführt.

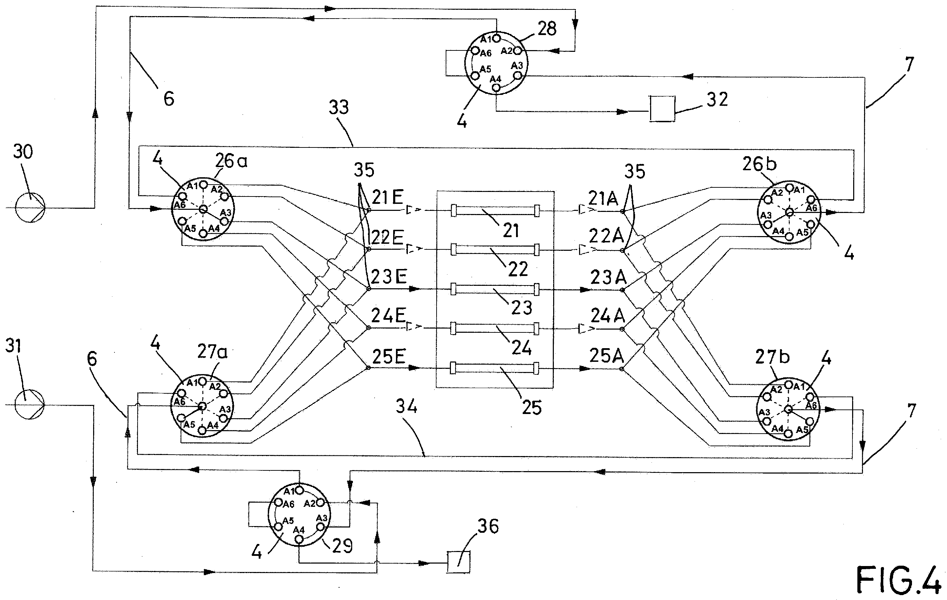

Fig. 4 zeigt wiederum dieselbe Ventilanordnung, allerdings werden entsprechend den Schaltstellungen der Ventile 28 und 29 sowohl die Messflüssigkeit als auch die Reinigungsflüssigkeit in Normal-Strömungsrichtung durch die Mess- und Reinigungssysteme geführt. Dabei wird entsprechend den Schaltstellungen der Ventile 26a und 26b die Messflüssigkeit durch die Trennsäule 23 geführt, und entsprechend den Schaltstellungen der Ventile 27a und 27b die Reinigungsflüssigkeit durch die Trennsäule 25.

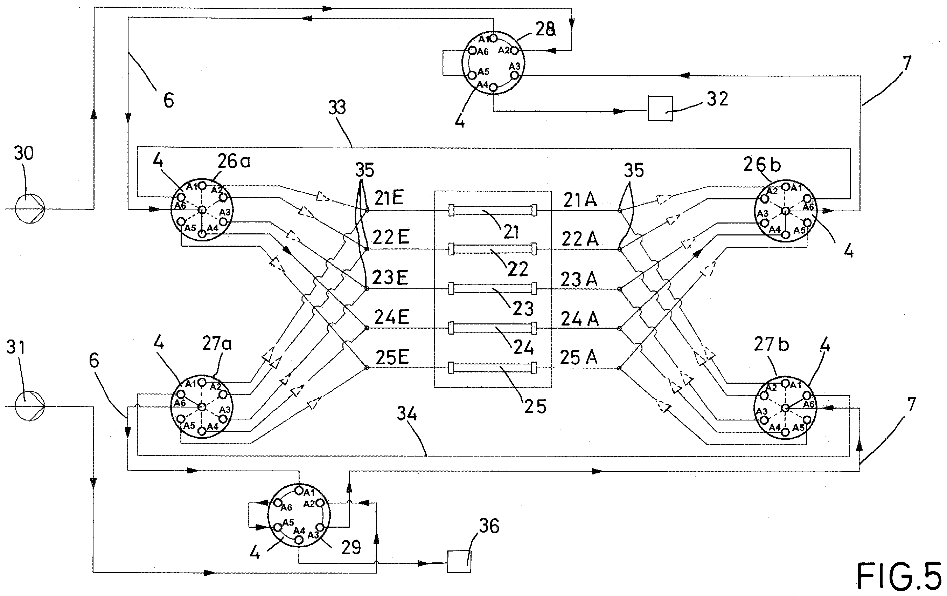

Fig. 5 zeigt die Ventilanordnung mit Schaltstellungen der Ventile 28 und 29, denen zufolge die Messflüssigkeit in Normal-Strömungsrichtung durch das Messsystem und die Reinigungsflüssigkeit in rückwärtiger Strömungsrichtung durch das Reinigungssystem geführt wird. Dabei wird entsprechend den Schaltstellungen der Ventile 26a und 26b die Messflüssigkeit durch die Trennsäule 24 geführt, und entsprechend den Schaltstellungen der Ventile 27a und 27b wird die Reinigungsflüssigkeit nicht durch eine Trennsäule geführt, sondern durch den unteren Bypass 34.

## Patentansprüche

1. Flüssigkeitschromatographie-Trennsäulenofen (1),
mit wenigstens 5 temperierbaren Trennsäulen (2, 3, 21, 22, 23, 24, 25),
wobei jede Trennsäule (2, 3, 21, 22, 23, 24, 25) einen ersten Flüssigkeitsanschluss (F1, 21E, 22E, 23E, 24E, 25E) sowie einen zweiten Flüssigkeitsanschluss (F2, 21A, 22A, 23A, 24A, 25A) aufweist,
und wobei in Abhängigkeit von der Strömungsrichtung die Flüssigkeitsanschlüsse (F1, F2, 21E, 22E, 23E, 24E, 25E, 21A, 22A, 23A, 24A, 25A) als Einlass und als Auslass der jeweiligen Trennsäule (2, 3, 21, 22, 23, 24, 25) bezeichnet sind,
und mit einer die Führung von Flüssigkeitsströmen zu den Trennsäulen (2, 3, 21, 22, 23, 24, 25) individuell bestimmenden Ventilanordnung,
wobei mittels der Ventilanordnung jede der Trennsäulen (2, 3, 21, 22, 23, 24, 25) wahlweise sperrbar oder durchströmbar ist,
und wobei die Ventilanordnung derart ausgestaltet ist, dass die Strömungsrichtung durch die Trennsäule (2, 3, 21, 22, 23, 24, 25) umkehrbar ist, indem derselbe Flüssigkeitsanschluss (F1, F2, 21E, 22E, 23E, 24E, 25E, 21A, 22A, 23A, 24A, 25A) einer Trennsäule (2, 3, 21, 22, 23, 24, 25) wahlweise als Einlass oder als Auslass dient, während gleichzeitig der jeweils andere Flüssigkeitsanschluss (F2, F1, 21E, 22E, 23E, 24E, 25E, 21A, 22A, 23A, 24A, 25A) derselben Trennsäule (2, 3, 21, 22, 23, 24, 25) dementsprechend den Auslass oder den Einlass bildet,
und wobei die Ventile der Ventilanordnung motorisch verstellbar sind,
und wobei eine programmierbare Ofensteuerung vorgesehen ist, welche eine automatische Temperierung und eine automatische Steuerung der Ventilanordnung ermöglichend ausgestaltet ist,
wobei jeder Trennsäule (2, 3, 21, 22, 23, 24, 25) ein Zulauf (6) und ein Ablauf (7) zugeordnet ist sowie ein erstes Mehrwegeventil (28, 29), welches wahlweise von dem Zulauf (6) zu dem ersten Flüssigkeitsanschluss (F1, 21E, 22E, 23E, 24E, 25E) oder zu dem zweiten Flüssigkeitsanschluss (F2, 21A, 22A, 23A, 24A, 25A) eine Strömungsverbindung schaltet,
sowie ein zweites Mehrwegeventil (28, 29), welches in Abhängigkeit von der Stellung des ersten Mehrwegeventils (28, 29) von dem zweiten Flüssigkeitsanschluss (F2) oder von dem ersten Flüssigkeitsanschluss (F1, 21E, 22E, 23E, 24E, 25E) eine Strömungsverbindung zu dem Ablauf (7) schaltet,
und dass jeder Trennsäule (2, 3, 21, 22, 23, 24, 25) ein Sperrventil zugeordnet ist, welches den Zulauf (6) wahlweise freigibt oder sperrt.

2. Trennsäulenofen nach Anspruch 1,
**dadurch gekennzeichnet,**
**dass** das erste und das zweite Mehrwegeventil zusammengefasst sind,
derart, dass ein beweglicher Ventilkörper (4) mit sechs Anschlussöffnungen (A1, A2, A3, A4, A5, A6) vorgesehen ist, wobei jeweils zwei Anschlussöffnungen (A1 und A2, A3 und A4, A5 und A6) innerhalb des Ventilkörpers (4) miteinander strömungsverbunden sind,
und **dass** der Ventilkörper (4) in einem Ventilgehäuse (5) geführt ist, welches sechs Gehäuseöffnungen (G1, G2, G3, G4, G5, G6) aufweist,
wobei jede Gehäuseöffnung (G1, G2, G3, G4, G5, G6) des Ventilgehäuses (5) in Strömungsverbindung mit einer Anschlussöffnung (A1, A2, A3, A4, A5, A6) des Ventilkörpers (4) steht,
und wobei in einer ersten Ventilstellung der Zulauf (6) zu einer zweiten Gehäuseöffnung (G2) des Ventilgehäuses (5), durch zwei miteinander verbundene Anschlussöffnungen (A2 und A1) des Ventilkörpers (4), und von einer ersten Gehäuseöffnung (G1) des Ventilgehäuses (5) zu dem ersten Flüssigkeitsanschluss (F1) der Trennsäule (2, 3) führt,
sowie aus dem zweiten Flüssigkeitsanschluss (F2) der Trennsäule (2, 3) durch eine dritte Gehäuseöffnung (G3) des Ventilgehäuses (5) zu zwei miteinander verbundenen Anschlussöffnungen (A3 und A4) des Ventilkörpers (4), und von dort zu einer vierten Gehäuseöffnung (G4) des Ventilgehäuses (5), die in Strömungsverbindung mit dem Ablauf (7) steht,
während in einer ersten Ventilstellung des Ventilkörpers (4) der Zulauf (7) zu der zweiten Gehäuseöffnung (G2) des Ventilgehäuses (5) führt, durch zwei miteinander verbundene Anschlussöffnungen (A1 und A2) des Ventilkörpers (4), und von einer dritten Gehäuseöffnung (G3) des Ventilgehäuses (5) zu dem zweiten Flüssigkeitsanschluss (F2) der Trennsäule (2, 3),
sowie aus dem ersten Flüssigkeitsanschluss (F1) der Trennsäule (2, 3) durch eine erste Gehäuseöffnung (G1) des Ventilgehäuses (5) zu zwei miteinander verbundenen Anschlussöffnungen (A6 und A5) des Ventilkörpers (4), von dort durch eine Verbindungsleitung, die zwischen zwei Gehäuseöffnungen (G6 und G5) vorgesehen ist, zu einer vierten Anschlussöffnung (A4) des Ventilkörpers (4), innerhalb des Ventilkörpers (4) zu einer dritten Anschlussöffnung (A3), die an eine vierte Gehäuseöffnung (G4) des Ventilgehäuses (5) grenzt, welche in Strömungsverbindung mit dem Ablauf (7) steht.

3. Trennsäulenofen nach einem der vorhergehenden Ansprüche,
**dadurch gekennzeichnet,**
**dass** die Ventile (26a, 26b, 27a, 27b, 28, 29) oder die Ventilkörper (4) der Ventilanordnung Anschlussöffnungen (A1, A2, A3, A4, A5, A6) aufweisen, welche im Kreis angeordnet sind.

4. Trennsäulenofen nach Anspruch 3,
**dadurch gekennzeichnet,**
**dass** sechs Anschlussöffnungen (A1, A2, A3, A4, A5, A6) um jeweils 60° zueinander versetzt angeordnet sind.

5. Trennsäulenofen nach einem der vorhergehenden Ansprüche,
**dadurch gekennzeichnet,**
**dass** die Ventilanordnung mehrere in einem so genannten Messsystem angeordnete Mehrwegeventile (26a, 26b, 28) aufweist, die zur Führung der zu analysierenden Messflüssigkeit dienen,
sowie mehrere in einem so genannten Reinigungssystem angeordnete Mehrwegeventile (27a, 27b, 29), die zur Führung einer zu analysierenden Messflüssigkeit dienen.

6. Trennsäulenofen nach Anspruch 5,
**dadurch gekennzeichnet,**
**dass** vor und hinter jeder Trennsäule (21, 22, 23, 24, 25) jeweils ein Dreiwege-Verbindungselement (35) vorgesehen ist,
welches eine Strömungsverbindung sowohl vom Zulauf (6) des Messsystems als auch vom Zulauf (6) des Reinigungssystems zu der jeweiligen Trennsäule (21, 22, 23, 24, 25) herstellt
beziehungsweise eine Strömungsverbindung sowohl vom Ablauf (7) des Messsystems als auch vom Ablauf (7) des Reinigungssystems zu der jeweiligen Trennsäule (21, 22, 23, 24, 25) herstellt.

## Claims

1. Liquid chromatography separating column oven (1),
having at least 5 temperature-controllable separating columns (2, 3, 21, 22, 23, 24, 25), where each separating column (2, 3, 21, 22, 23, 24, 25) incorporates a first liquid connection (F1, 21E, 22E, 23E, 24E, 25E) and a second liquid connection (F2, 21A, 22A, 23A, 24A, 25A)
and where, depending on the direction of flow, the liquid connections (F1, F2, 21E, 22E, 23E, 24E, 25E, 21A, 22A, 23A, 24A, 25A) are referred to as the inlet and outlet of the respective separating column (2, 3, 21, 22, 23, 24, 25),
and having a valve assembly that individually determines the control of liquid flows to the separating columns (2, 3, 21, 22, 23, 24, 25),
where by means of the valve assembly each of the separating columns (2, 3, 21, 22, 23, 24, 25) can be shut off or flowed through, as required
and where the valve assembly is designed in such a way that the direction of flow through the separating column (2, 3, 21, 22, 23, 24, 25) is reversible in that the same liquid connection (F1, F2, 21E, 22E, 23E, 24E, 25E, 21A, 22A, 23A, 24A, 25A) of one separating column (2, 3, 21, 22, 23, 24, 25) is used as an inlet or an outlet, as required, while at the same time the other liquid connection (F2, F1, 21E, 22E, 23E, 24E, 25E, 21A, 22A, 23A, 24A, 25A) of the same separating column (2, 3, 21, 22, 23, 24, 25) accordingly forms the inlet or the outlet
and where the valves of the valve assembly can be adjusted by means of a motor, and where a programmable oven control system is provided for, which is designed so as to enable automatic temperature control and automatic control of the valve assembly,
where each separating column (2, 3, 21, 22, 23, 24, 25) is assigned a feed line (6) and a drain line (7)
as well as a first multi-way valve (28, 29) that switches a flow connection to the first liquid connection (F1, 21E, 22E, 23E, 24E, 25E)
as well as a first multi-way valve (28, 29) that switches a flow connection from the inlet (6) to the first liquid connection (F1, 21E, 22E, 23E, 24E, 25E) or to the second liquid connection (F2, 21A, 22A, 23A, 24A, 25A), as required,
as well as a second multi-way valve (28, 29) that, depending on the position of the first multi-way valve (28, 29), switches a flow connection from the second liquid connection (F2) or from the first liquid connection (F1, 21E, 22E, 23E, 24E, 25E) to the drain line (7),
and that each separating column (2, 3, 21, 22, 23, 24, 25) is assigned a stop valve that opens or shuts the feed line (6), as required.

2. Separating column oven in accordance with claim 1, **characterised in that** the first and the second multi-way valve are grouped together in such a way that a movable valve body (4) with six connecting holes (A1, A2, A3, A4, A5, A6) is provided for,
where each two connecting holes (A1 and A2, A3 and A4, A5 and A6) are flow-connected to each other inside the valve body (4),
and that the valve body (4) is guided in a valve housing (5) that incorporates six housing holes (G1, G2, G3, G4, G5, G6),
where each housing hole (G1, G2, G3, G4, G5, G6) in the valve housing (5) is flow-connected to a connecting hole (A1, A2, A3, A4, A5, A6) in the valve body (4) and where in a first valve position the feed line (6) runs to a second housing hole (G2) in the valve housing (5) through two connecting holes (A2 and A1) joined to each other in the valve body (4) und from a first housing hole (G1) in the valve housing (5) to the first liquid connection (F1) of the separating column (2, 3)
as well as from the second liquid connection (F2) of the separating column (2, 3) via a third housing hole (G3) in the valve housing (5) to two connecting holes (A3 and A4) joined together in the valve body (4) and from there to a fourth housing hole (G4) in the valve housing (5), which is flow-connected to the drain line (7),
while in a first valve position of the valve body (4) the feed line (6) runs to the second housing hole (G2) in the valve housing (5) through two connecting holes (A1 and A2) joined together in the valve body (4) and from a third housing hole (G3) in the valve housing (5) to the second liquid connection (F2) of the separating column (2, 3) as well as from the first liquid connection (F1) in the separating column (2, 3) through a first housing hole (G1) in the valve housing (5) to two connecting holes (A6 and A5) joined together in the valve body (4) and from there through a connecting line that is provided for between two housing holes (G6 and G5) to a fourth connecting hole (A4) in the valve body (4) and inside the valve body (4) to a third connecting hole (A3) that adjoins a fourth housing hole (G4) in the valve housing (5) that is flow-connected to the drain line (7).

3. Separating column oven in accordance with any one of the foregoing claims,
**characterised in**
**that** the valves (26a, 26b, 27a, 27b, 28, 29) or the valve bodies (4) of the valve assembly incorporate connecting holes (A1, A2, A3, A4, A5, A6) that are arranged in a circle.

4. Separating column oven in accordance with claim 3, **characterised in that** six connecting holes (A1, A2, A3, A4, A5, A6) are arranged 60° apart from each other.

5. Separating column oven in accordance with any one of the foregoing claims,
**characterised in**
**that** the valve assembly incorporates a number of multi-way valves (26a, 26b, 28) arranged in a so-called measuring system that are used to control the measuring liquid to be analysed
as as well as a number of multi-way valves (27a, 27b, 29) that are used to control a measuring liquid to be analysed.

6. Separating column oven in accordance with claim 5, **characterised in that** upstream and downstream of each separating column (21, 22, 23, 24, 25) a three-way connecting element (35) is provided for
that upstream establishes a flow connection both from the feed line (6) of the measuring system and from the feed line (6) of the cleaning system to the respective separating column (21, 22, 23, 24, 25)
and downstream establishes a flow connection both from the drain line (7) of the measuring system and from the drain line (7) of the cleaning system to the respective separating column (21, 22, 23, 24, 25).

## Revendications

1. Four (1) à colonnes de séparation pour chromatographie en phase liquide, comprenant au moins 5 colonnes de séparation thermostatisables (2, 3, 21, 22, 23, 24, 25),
sachant que chaque colonne de séparation (2, 3, 21, 22, 23, 24, 25) présente un premier raccord de liquide (F1, 21E, 22E, 23E, 24E, 25E) ainsi qu'un second raccord de liquide (F2, 21A, 22A, 23A, 24A, 25A),
et sachant qu'en fonction de la direction d'écoulement les raccords de liquide (F1, F2, 21E, 22E, 23E, 24E, 25E, 21A, 22A, 23A, 24A, 25A) sont désignés comme admission et comme sortie de la colonne de séparation respective (2, 3, 21, 22, 23, 24, 25), et comprenant un agencement de vannes déterminant de manière individuelle le guidage des flux de liquide vers les colonnes de séparation (2, 3, 21, 22, 23, 24, 25), sachant qu'au moyen de l'agencement de vanne chacune des colonnes de séparation (2, 3, 21, 22, 23, 24, 25) peut faire barrage au flux ou le laisser passer,
et sachant que l'agencement de vannes est configuré de sorte que la direction d'écoulement dans la colonne de séparation (2, 3, 21, 22, 23, 24, 25) est inversible, du fait que le même raccord de liquide (F1, F2, 21E, 22E, 23E, 24E, 25E, 21A, 22A, 23A, 24A, 25A) d'une colonne de séparation (2, 3, 21, 22, 23, 24, 25) sert au choix d'admission ou de sortie, tandis que simultanément l'autre raccord respectif de liquide (F2, F1, 21E, 22E, 23E, 24E, 25E, 21A, 22A, 23A, 24A, 25A) de la même colonne de séparation (2, 3, 21, 22, 23, 24, 25) forme de façon correspondante la sortie ou l'admission,
et sachant que les vannes de l'agencement de vannes sont ajustables de manière motorisée,
et sachant qu'est prévue une commande programmable de four configurée de sorte à permettre une thermostatisation automatique et une commande automatique de l'agencement de vannes,
sachant qu'à chaque colonne de séparation (2, 3, 21, 22, 23, 24, 25) sont attribuées une conduite d'amenée (6) et une conduite d'évacuation (7)
ainsi qu'une première vanne multivoies (28, 29) qui commute une liaison d'écoulement de la conduite d'amenée (6) vers, au choix, le premier raccord de liquide (F1, 21E, 22E, 23E, 24E, 25E) ou le deuxième raccord de liquide (F2, 21A, 22A, 23A, 24A, 25A), ainsi qu'une deuxième vanne multivoies (28, 29) qui, en fonction de la position de la première vanne multivoies (28, 29), commute du deuxième raccord de liquide (F2) ou du premier raccord de liquide (F1, 21E, 22E, 23E, 24E, 25E) une liaison d'écoulement vers la conduite d'évacuation (7),
et qu'à chaque colonne de séparation (2, 3, 21, 22, 23, 24, 25) est attribuée une vanne de barrage qui au choix ouvre ou ferme la conduite d'amenée (6).

2. Four à colonnes de séparation selon la revendication 1, **caractérisé en ce que** la première et la deuxième vanne multivoies sont réunies,
de sorte qu'un corps (4) de vanne mobile est prévu avec six orifices de raccordement (A1, A2, A3, A4, A5, A6),
sachant que respectivement deux orifices de raccordement (A1 et A2, A3 et A4, A5 et A6) sont reliés en écoulement à l'intérieur du corps (4) de vanne,
et que le corps (4) de vanne est guidé dans un carter (5) de vanne, carter qui présente six orifices (G1, G2, G3, G4, G5, G6),
sachant que chaque orifice (G1, G2, G3, G4, G5, G6) du carter (5) de vanne se trouve en liaison d'écoulement avec un orifice de raccordement (A1, A2, A3, A4, A5, A6) du corps (4) de vanne,
et sachant que dans une première position de vanne l'orifice d'arrivée (6) conduit à un second orifice (G2) du carter (5) de vanne à travers deux orifices de raccordement (A2 et A1) du corps (4) de vanne reliés entre eux, et d'un premier orifice (G1) du carter (5) de vanne vers le premier raccord de liquide (F1) de la colonne de séparation (2, 3), ainsi qu'à partir du deuxième raccord de liquide (F2) de la colonne de séparation (2, 3) par un troisième orifice (G3) du carter (5) de vanne vers deux orifices de raccordement (A3 et A4) du corps (4) de vanne reliés entre eux, et de là vers un quatrième orifice (G4) du carter (5) de vanne, orifice qui se trouve en liaison d'écoulement avec la conduite d'évacuation (7),
tandis que, dans une première position du corps (4) de vanne, l'orifice d'arrivée (6) conduit au deuxième orifice (G2) du carter (5) de vanne, à travers deux orifices de raccordement (A1 et A2) du corps (4) de vanne reliés entre eux, et d'un troisième orifice (G3) du carter (5) de vanne vers le deuxième raccord de liquide (F2) de la colonne de séparation (2, 3),
ainsi que depuis le premier raccord de liquide (F1) de la colonne de séparation (2, 3) à travers un premier orifice (G1) du carter (5) de vanne vers deux orifices de raccordement (A6 et A5) du corps (4) de vanne reliés entre eux, de là par une conduite de liaison, qui est prévue entre deux orifices (G6 et G5) de carter, vers un quatrième orifice de raccordement (A4) du corps (4) de vanne, à l'intérieur du corps (4) de vanne, vers un troisième orifice de raccordement (A3) qui jouxte un quatrième orifice (G4) du carter (5) de vanne, orifice qui se trouve en liaison d'écoulement avec la conduite d'évacuation (7).

3. Four à colonnes de séparation selon l'une des revendications précédentes, **caractérisé en ce**
**que** les vannes (26a, 26b, 27a, 27b, 28, 29) ou les corps (4) de vanne de l'agencement de vannes présentent des orifices de raccordement (A1, A2, A3, A4, A5, A6) disposés en cercle.

4. Four à colonnes de séparation selon la revendication 3, **caractérisé en ce que** six orifices de raccordement (A1, A2, A3, A4, A5, A6) sont agencés mutuellement décalés à 60° les uns des autres.

5. Four à colonnes de séparation selon l'une des revendications précédentes, **caractérisé en ce**
**que** l'agencement de vannes présente plusieurs vannes multivoies (26a, 26b, 28) disposées en système dit de mesure, vannes qui servent à guider le liquide de mesure à analyser,
et en ce que plusieurs vannes multivoies (27a, 27b, 29) disposées en système dit de nettoyage servent à guider un liquide de mesure à analyser,

6. Four à colonnes de séparation selon la revendication 5, **caractérisé en ce qu'**en amont et en aval de chaque colonne de séparation (21, 22, 23, 24, 25) est respectivement prévu un élément de liaison (35) à trois voies,
qui établit une liaison d'écoulement aussi bien de l'orifice d'amenée (6) du système de mesure que de l'orifice d'amenée (6) du système de nettoyage vers la colonne de séparation respective (21, 22, 23, 24, 25), et/ou qui établit une liaison de flux aussi bien depuis la conduite d'évacuation (7) du système de mesure que depuis la conduite d'évacuation (7) du système de nettoyage vers la colonne de séparation (21, 22, 23, 24, 25) respective.
